## Europäisches Patentamt

## European Patent Office

## Office européen des brevets

(19)

(11) Numéro de publication: **0 294 249**
**B1**

(12) **FASCICULE DE BREVET EUROPEEN**

(45) Date de publication du fascicule du brevet:
**16.08.90**

(51) Int. Cl.⁵: **B62B 1/12**

(21) Numéro de dépôt: **88401012.5**

(22) Date de dépôt: **26.04.88**

(54) Perfectionnements aux chariots communément dénommés "diable" et chariots pourvus de ces perfectionnements.

(30) Priorité: **05.05.87 FR 8706686**

(43) Date de publication de la demande:
**07.12.88 Bulletin 88/49**

(45) Mention de la délivrance du brevet:
**16.08.90 Bulletin 90/33**

(84) Etats contractants désignés:
**AT BE CH DE ES FR GB GR IT LI LU NL SE**

(56) Documents cités:
**FR-A- 2 377 312**
**FR-A- 2 437 333**
**GB-A- 2 037 675**

(73) Titulaire: **ARTIX S.A., Route de Montdidier,
F-60120 Breteuil sur Noye(FR)**

(72) Inventeur: **Stremler, Jean-Pierre, 33 rue des
Abondances, F-92110 Boulogne Billancourt(FR)**

(74) Mandataire: **Ecrepont, Robert, Cabinet
Ecrepont 12 Place Simon Vollant, F-59800 Lille(FR)**

ACTORUM AG

## Description

L'invention se rapporte à des pefectionnements aux chariots communément dénommés "diable" et aux chariots pourvus de ces perfectionnements.

Ces perfectionnements visent plus particulièrement à permettre sa transformation et notamment à adapter sa structure en fonction de la charge qu'il transporte.

Les diables sont classiquement tout d'abord constitués d'un chassis, généralement tubulaire, formé par deux longerons reliés entre eux par des entretoises.

A une des extrémités du chassis principal est, sensiblement perpendiculairement à celui-ci, fixée une courte plateforme destinée à s'insérer sous la charge à transporter.

Cette plateforme est généralement constituée par l'une des ailes d'une tôle pliée en forme de "L" dont l'autre aile est disposée dans le plan du chassis.

A cette même extrémité, du côté opposé à la plateforme, le chassis porte des organes de roulement.

Lors du transport d'une charge, le chassis est légèrement incliné par rapport à la verticale afin que le centre de gravité de la charge surplombe sensiblement l'axe des organes de roulement.

En conséquence, les efforts exercés pour la manoeuvre de ce type de chariot ne sont nullement éprouvants pour l'utilisateur.

Afin, notamment en période d'inutilisation, de réduire l'encombrement en hauteur des longerons il est connu de les réaliser en deux tronçons montés télescopiquement (FR-A-2561601) ou articulés l'un sur l'autre (FR-A-2513957 et 2060267) ce qui en outre permet l'utilisation du diable comme un chariot traditionnel par adjonction de deux roues près de l'articulation.

Ce chariot traditionnel n'offre alors toutefois aucune élasticité de suspension.

Si, par contre, en tant que diable, qu'il soit à longerons repliables ou non, ce type de chariot convient pour le transport de charges compactes, il ne peut convenir pour le transport d'une botte non ligaturée de produits divers telle un lot de buches.

Pour pallier à cet inconvénient, on connaît (FR-A-2377312) un diable pourvu de moyens complémentaires rallongeant et rehaussant la plateforme.

Les moyens rallongeant la plateforme comprennent alors une rallonge formée d'un chassis annexe qui, par un de ses bords, est articulé sur l'axe supportant les organes de roulement du chassis principal tandis qu'à son bord opposé, il présente une partie repliée à l'équerre.

Par articulation autour de l'axe des organes de roulement, ce chassis annexe peut ainsi soit être rangé les longerons du chassis principal soit au contraire être déplié jusqu'à buter sur la plateforme.

Les moyens rehaussant la plateforme comprennent une rehausse formée d'un cadre articulé sur la rallonge, près de la base de la partie du chassis annexe repliée à l'équerre.

De ce fait, cette rehausse peut soit être rangée dans le plan de la rallonge, soit être relevée jusqu'à buter sur le bord de la partie repliée à l'équerre.

Ainsi réalisé un tel diable peut transporter tant des charges compactes pour lesquelles les éléments de transformation dont il est muni peuvent tous être rangés que des bottes non ligaturées de produits divers dès que la rallonge et la rehausse ont été déployées.

Dans le cas des charges compactes, à l'arrivée, il suffit de dégager le diable.

Dans le cas de bottes non ligaturées; il faut par contre transporter les produits dans un support approprié tel un porte-bûches.

Lors du franchissement de passage trop étroit, il faut de même vider le chariot puis le recharger du côté opposé au dit passage.

Un résultat que l'invention vise à obtenir est un chariot du type diable qui, toute en étant perfectionné, de manière à lui permettre de transporter tant des charges compactes que des bottes de produits non ligaturés, n'augmente pas pour autant son gabarit et ne complique pas sa conception.

Est également un résultat de l'invention, un diable avec lequel, notamment pour les produits en bottes, les manutentions à l'arrivée ou lors de passages trop étroits, sont simplifiées. Est encore un résultat de l'invention, un diable utilisable en chariot traditionnel suspendu élastiquement.

A cet effet, l'invention a pour objet des perfectionnements à un chariot du type précité notamment caractérisés en ce que les moyens complémentaires consistent en une structure tubulaire associée au chassis principal par des moyens démontables de fixation.

Elle a également pour objet le chariot pourvu de ces pefectionnements.

L'invention sera bien comprise à l'aide de la description ci-après faite à titre d'exemple non limitatif, en regard du dessin ci-annexé qui représente schématiquement :

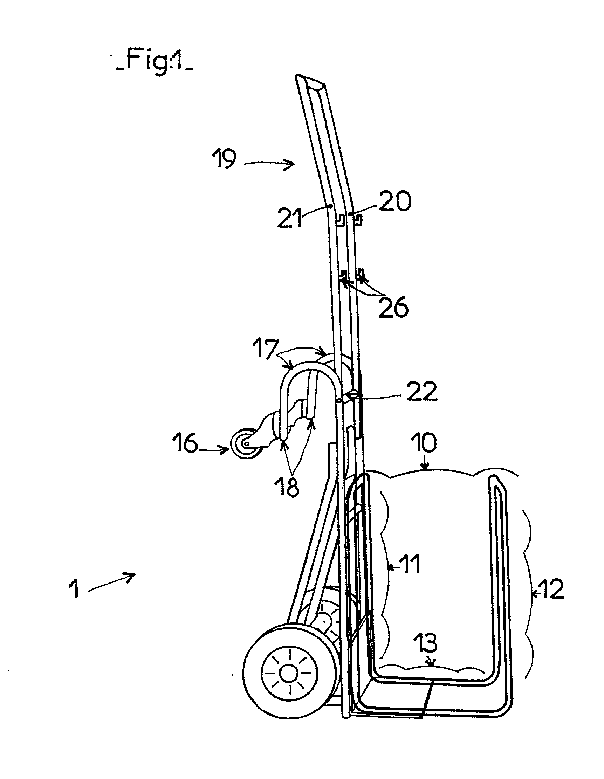

- figure 1 : vu en perspective, un diable pourvu des perfectionnements selon l'invention,

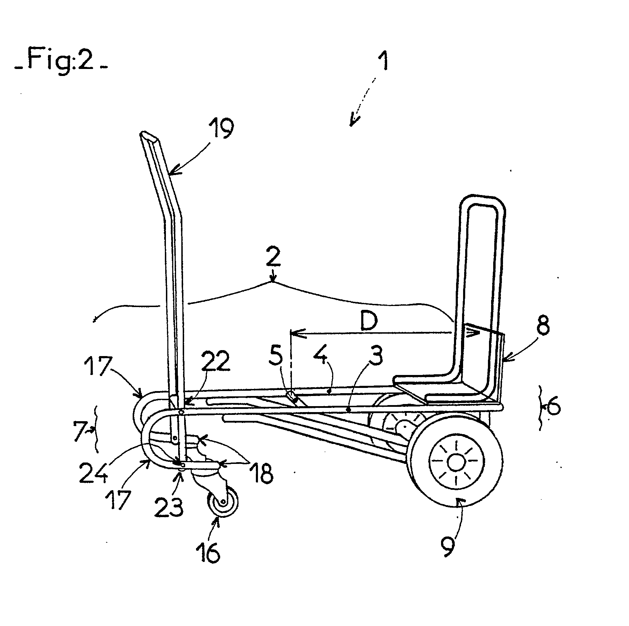

- figure 2 : vue en perspective, une variante d'utilisation d'un tel diable,

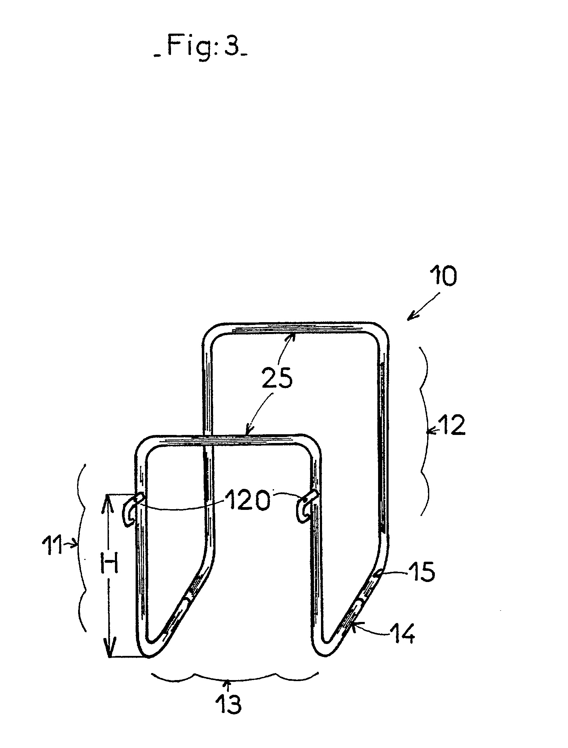

- figure 3 : vu en perspective, un élément de ce diable.

En se reportant au dessin, on voit un chariot 1 d'un type communément dénommé "diable" tout d'abord constitué d'un chassis 2 formé par deux longerons 3, 4 réunis entre eux par des entretoises 5.

Sensiblement perpendiculairement à l'une (6) des extrémités 6, 7 de ce chassis 2 est fixée une courte plateforme 8 de préférence constituée par une des ailes d'une tôle pliée en forme de "L" dont l'autre aile est disposée dans le plan du chassis tubulaire.

A cette même extrémité, du côté opposé à la plateforme 8, le chassis porte des organes de roulement 9.

Lors du transport de charges, un tel chariot 1 est légèrement incliné pour placer le centre de gravité de la charge au dessus de l'axe des organes de roulement 9 et réduire ainsi les efforts qu'exige sa manoeuvre.

Notamment, pour qu'un tel diable qui donne pleinement satisfaction pour le transport de charges compactes soit également utilisable pour le transport de charges se présentant sous la forme de produits en botte non ligaturée, tels un lot de buches, de manière connue, sont prévus des moyens complémentaires 10 rallongeant plus ou moins la plateforme ainsi que des moyens rehaussant l'extrémité libre de la plateforme. De même, afin de permettre le transport de charges présentant à la fois un volume et une densité importants, plutôt que d'être utilisé classiquement en position légèrement inclinée, ce diable peut être utilisé en tant que chariot traditionnel et, à cet effet, de manière connue :

- d'une part, le chassis 2 comprend du côté opposé à la plateforme, une partie repliable 19 sur l'autre partie qui est celle pourvue de la plateforme et qui est dite chassis principal 2 et,
- d'autre part, l'extrémité 7 du chassis annexe opposée à celle pourvue de la plateforme est munie de roulettes supplémentaires 16, de préférence autoorientables.

Selon une caractéristique essentielle de l'invention, les moyens complémentaires 10 consistent en une structure tubulaire associée au chassis principal 2 par des moyens démontables de fixation.

Dans une forme préférée de réalisation, la structure tubulaire 10 a, en vue de profil, une section en U dont l'une au moins de ces branches 11, 12 est pourvue de crochets 120 à une hauteur "H" de la base 13 du dit U correspondant à la distance D entre le dessus de la plateforme 8 et une entretoise 5 des longerons afin que, par crochetage d'une de ses ailes 11, 12, la structure soit fixée au chassis tout en reposant par sa base 13 sur la plateforme 8 du chassis principal.

Avec une telle structure, les produits en botte non ligaturée, sont principalement maintenus par la branche 11 ou 12 opposée à celle fixée à l'entretoise et par la base 13 qui en outre augmente la capacité de chargement du chariot.

L'amovibilité de cette structure 10 permet de faciliter grandement les manoeuvres à l'arrivée ou la dépose de la charge pour le franchissement d'un passage trop étroit.

Il suffit de séparer du chariot, la structure avec son chargement pour la laisser sur place à l'arrivée où elle joue le rôle de porte-produits ou pour lui faire franchir isolément un passage étroit avant d'être raccrochée au chariot après le franchissement du dit passage étroit.

Avantageusement, à leur partie supérieure, les branches 11, 12 portent une traverse 25 réalisant une poignée de transport. Dans une variante de réalisation, la structure tubulaire présente, en vue de profil, une section en L dont une branche s'applique sur la plateforme pour la rallonger et dont l'autre branche présente un perçage à une distance correspondant à celle d'un perçage que, par rapport à la dite plateforme, présente le chassis principal pour y être fixé par boulonnage.

Dans une forme préférée, la structure tubulaire 10 ayant de profil une forme en U est scindée en deux tronçons en L 14, 15 assemblés entre eux de manière démontable par manchonnage et pose dans un perçage traversant la partie manchonnée d'un organe amovible tel un boulon dont, de préférence, la tête de la tige filetée et/ou de l'écrou est pourvue de formes facilitant sa manoeuvre sans outils telles des oreilles.

Avec une telle structure amovible 10 en forme de U scindé en deux éléments, l'un d'eux peut avantageusement être utilisé isolément pour constituer la structure amovible en forme de L. Les perçages prévus pour l'assemblage sur l'autre tronçon servent alors à l'assemblage au chassis.

En raison du porte-à-faux résultant de la longueur de la branche 12 qui allonge fortement la plateforme, la charge pourrait alors exercer un couple important si le chariot était utilisé en diable.

Aussi, avec cette rallonge, le chariot est de préférence utilisé comme chariot traditionnel par appui au sol également sur ses roulettes orientables 16.

Afin, lors de cette utilisation, de procurer au chariot une certaine souplesse de suspension au moins au voisinage de l'extrémité 7 du chassis principal pourvue des roulettes orientables, les longerons 3, 4 du chassis principal 2 se poursuivent chacun par une crosse 17 et les roulettes 16 orientables sont fixées à l'extrémité libre 18 de cette crosse.

Dans une forme avantageuse de réalisation, afin de faciliter le mouvement de ce diable 1 en version chariot, la partie repliable 19 du chassis a la forme d'un arceau dont les deux bras 20, 21 qui sont articulés autour d'un axe 22 du chassis principal présentent, au delà de cet axe 22, un prolongement de longueur au moins égale à la largeur de la crosse 17 et qui est pourvu à son extrémité libre 23 d'un organe 24 verrouillable sur cette crosse 17 dans une position où ces bras 20, 21 sont sensiblement perpendiculaires au chassis principal 2.

Tel que cela peut également être prévu par l'invention, la partie repliable 19 en forme d'arceau est pourvue, selon chacun de ses bras 20, 21, de crochets 26 grâce auxquels un cadre, en vue de maintenir béant le bord de sacs tels les sacs poubelles, peut être être encastré.

## Revendications

1. Chariot du type communément dénommé "diable" tout d'abord constitué d'un chassis (2) formé par deux longerons (3, 4) réunis entre eux par des entretoises (5) sur lequel, sensiblement perpendiculairement à l'une (6) des extrémités (6, 7) de ce chassis (2) est fixée une courte plateforme (8) tandis qu'à cette même extrémité, du côté opposé à la plateforme (8), le chassis porte des organes de roulement (9), lequel chariot comprend des moyens complémentaires (10) rallongeant plus ou moins la plateforme ainsi que des moyens rehaussant l'extrémité libre de la plateforme, voire même du côté opposé à la plateforme, une partie repliable (19) sur l'autre partie qui est celle pourvue de la plateforme et qui est dite chassis principal (2) et, l'extrémité (7) du chassis annexe opposée à celle pourvue de la plateforme est munie de roulettes supplémentaires (16), de préférence auto-orientables,

ce chariot étant caractérisé en ce que les moyens complémentaires (10) consistent en une structure tubulaire associée au chassis principal (2) par des moyens démontables de fixation.

2. Chariot selon la revendication 1 caractérisé en ce que la structure tubulaire (10) a, en vue de profil, une section en (U) dont l'une au moins de ces branches (11, 12) est pourvue de crochets (120) à une hauteur (H) de la base (13) du dit (U) correspondant à la distance (D) entre le dessus de la plateforme (8) et une entretoise (5) des longerons afin que, par crochetage d'une de ses ailes (11, 12), la structure soit fixée au chassis tout en reposant par sa base (13) sur la plateforme (8) du chassis principal.

3. Chariot selon la revendication 2 caractérisé en ce qu'à leur partie supérieure, les branches (12) portent une traverse (25) réalisant une poignée de transport.

4. Chariot selon la revendication 1 caractérisé en ce que la structure tubulaire présente, en vue de profil, une section en (L) dont une branche s'applique sur la plateforme pour la rallonger et dont l'autre branche présente un perçage à une distance correspondant à celle d'un perçage que, par rapport à la dite plateforme, présente le chassis principal pour y être fixé par boulonnage.

5. Chariot selon l'une quelconque des revendications 1 a 3 caractérisé en ce que la structure tubulaire 10 ayant de profil une forme en (U) est scindée en deux tronçons en L (14, 15) assemblés entre eux de manière démontables par manchonnage et pose dans un perçage traversant la partie manchonnée d'un organe amovible tel un boulon dont de préférence, la tête de la tige filetée et/ou de l'écrou est pourvue de formes facilitant sa manoeuvre sans outils.

6. Chariot selon la revendication 4 ou 5 caractérisé en ce que l'un des tronçons (14, 15) est utilisé isolément pour constituer la structure amovible en forme de L et les perçages prévus pour l'assemblage sur l'autre tronçon servent alors à l'assemblage au chassis.

7. Chariot selon l'une quelconque des revendications 1 à 6 caractérisé en ce qu'au moins au voisinage de l'extrémité (7) du chassis principal pourvue des roulettes orientables, les longerons (3, 4) du chassis principal (2) se poursuivent chacun par une crosse (17) et les roulettes (16) orientables sont fixées à l'extrémité libre (18) de cette crosse.

8. Chariot selon l'une quelconque des revendications 1 à 7 caractérisé en ce que la partie repliable (19) du chassis a la forme d'un arceau dont les deux bras (20, 21) qui sont articulés autour d'un axe (22) du chassis principal présentent, au delà de cet axe (22), un prolongement de longueur au moins égale à la largeur de la crosse (17) et qui est pourvu à son extrémité libre (23) d'un organe (24) verrouillable sur cette crosse (17) dans une position où ces bras (20, 21) sont sensiblement perpendiculaires au chassis principal (2).

**Patentansprüche**

1. Handkarren, gemeinhin "Stechkarre" genannt, bestehend zunächst aus einem Rahmen (2), der aus zwei Längsträgern (3, 4) gebildet wird, die untereinander durch Traversen (5) verbunden sind, auf welchem, im wesentlichen rechtwinklig zu einem (6) der Enden (6, 7) des Rahmens (2) eine kurze Plattform (8) befestigt ist, während an diesen gleichen Ende auf der der Plattform (8) entgegensetzt liegenden Seite der Rahmen Rollelemente (9) trägt, wobei der Handkarren Zusatzeinrichtungen (10), die die Plattform mehr oder weniger verlängern, sowie Einrichtungen zur Aufstockung des freien Endes der Plattform, und ebenso auf der Seite, die zu der Plattform entgegengesetzt angeordnet ist, ein Klappteil (19) auf dem anderen Teil aufweist, das jenes für die Plattform vorgesehen ist und den Hauptteil des Rahmens (2) bildet, wobei das angrenzende, entgegengesetzt zu einem mit der Plattform versehene Ende (7) des Rahmens mit Zusatzrollen (16), vorzugsweise selbstlenkenden, ausgestattet ist, dadurch gekennzeichnet, daß die Zusatzeinrichtung (10) aus einer Rohrstruktur besteht, die mit abnehmbaren Befestigungseinrichtungen am Hauptrahmen (2) befestigt ist.

2. Handkarren nach Anspruch 1, dadurch gekennzeichnet, daß die Rohrstruktur in der Profilansicht einen U-förmigen Abschnitt aufweist, wobei mindestens einer seiner Arme (11, 12) mit Haken (120) von einer Höhe (H) von der Grundfläche (13) des besagten U versehen ist, die der Entfernung (D) zwischen der Oberkante der Plattform (8) und einer Traversen (5) der Längsträger entspricht, so daß durch Einhängen einer seiner Flügel (11, 12) die Struktur am Rahmen so befestigt werden kann, daß sie mit ihrer Grundfläche ganz auf der Plattform (8) es Hauptrahmens aufliegt.

3. Handkarren nach Anspruch 2, dadurch gekennzeichnet, daß die Arme (12) an ihrem oberen Teil eine Traverse (25) tragen, die einen Traggriff bilden.

4. Handkarren nach Anspruch 1, dadurch gekennzeichnet, daß die Rohrstruktur in der Profilansicht einen L-Abschnitt bildet, deren einer Arm sich an die Plattform anpaßt und es verlängert und deren anderer Arm eine Durchbohrung in einer Entfernung aufweist, die derjenigen einer Durchbohrung entspricht, die bezüglich der besagten Plattform den Hauptrahmen bildet und dort durch Bolzenverbindungen befestigt ist.

5. Handkarren nach irgendeinem der Ansprüche 1 bis 3, dadurch gekennzeichnet, daß die Rohrstruktur (10) ein U-förmiges Profil hat und in zwei L-Abschnitte (14, 15) unterteilt ist, die demontierbar aneinander durch Muffen befestigt sind und in einer Querbohrung das Muffenteil eines abnehmbaren Teils, wie z.B. einen Bolzen tragen, dessen mit Gewinde versehener Stangenkopf und/oder Schraube vorzugsweise so ausgestaltet ist, daß seine Bedienung ohne Werkzeug möglich ist.

6. Handkarren nach Anspruch 4 oder 5, dadurch gekennzeichnet, daß einer der Abschnitte (14, 15) für sich verwendet wird, um die abnehmbare Struktur in L-Form zu bilden und die Durchbohrungen für die Befestigung auf dem anderen Abschnitt vorgesehen sind und dann für die Befestigung am Rahmen dienen.

7. Handkarren nach irgendeinem der Ansprüche 1 bis 6, dadurch gekennzeichnet, daß mindestens in der Umgebung des Endes (7) des Hauptrahmens schwenkbare Rollen (16) vorgesehen sind, die Längsträger (3, 4) des Hauptrahmens sich jeweils in Traversen (17) fortsetzen und die schwenkbaren Rollen (16) am freien Ende (18) der Traversen befestigt sind.

8. Handkarren nach irgendeinem der Ansprüche 1 bis 7, dadurch gekennzeichnet, daß das Klappteil (19) des Rahmens die Form eines Bogens hat, dessen zwei Arme (20, 21), die über eine Achse (22) mit dem Hauptrahmen verbunden sind, über diese Achse (22) hinaus eine Verlängerung von einer Länge aufweisen, die mindestens gleich der Größe der Traverse (17) ist, und das an seinem freien Ende (23) mit einem auf dieser Traverse (17) in einer Position, n der diese Arme (20, 21) genau senkrecht zum Hauptrahmen (2) stehen, verriegelbaren Element (24) versehen ist.

## Claims

1. A barrow of the type commonly known as a "sack barrow" primarily made up of a chassis (2) formed by two side rails (3, 4) joined together by crossbars (5) on which there is fixed, substantially perpendicularly to one (6) of the ends (6, 7) of this chassis (2), a short platform (8) while at this same end, on the side remote from the platform (8), the chassis carries rolling members (9), which barrow comprises complementary means (10) for lengthening the platform to a greater or lesser extent as well as means for raising the free end of the platform and even, on the side remote from the platform, a portion (19) which can be folded back over the other portion which is the one provided with the platform and which is said main chassis (2), and the end (7) of the attached chassis remote from the one provided with the platform is equipped with additional, preferably selfsteerable, castors (16), this barrow being characterised in that the complementary means (10) consist of a tubular structure connected to the main chassis (2) by detachable fixing means.

2. A barrow according to claim 1, characterised in that the tubular structure (10) has, in a profile view, a U-shaped section of which at least one of these branches (11, 12) is provided with hooks (120) at a height (H) from the base (13) of said U corresponding to the distance (D) between the top of the platform (8) and a crossbar (5) of the side rails so that, by hooking of one of its wings (11, 12), the structure is fixed to the chassis while resting by its base (13) on the platform (8) of the main chassis.

3. A barrow according to claim 2, characterised in that, at their upper portion, the branches (12) carry a cross member (25) producing a carrying handle.

4. A barrow according to claim 1, characterised in that the tubular structure has, in a profile view, an L-shaped section of which one branch is applied to the platform to lengthen it and of which the other branch has a hole at a distance corresponding to that of a hole which the main chassis has, relative to said platform, so as to be fixed there by bolting.

5. A barrow according to any one of claims 1 to 3, characterised in that the tubular structure 10 having a U-shaped profile is split into two L-shaped pieces (14, 15) which are detachably joined together in the manner of a sleeve coupling and by placing, in a hole traversing the sleeve coupling portion, a removable member such as a bolt of which the head of the threaded shank and/or of the nut is preferably provided with shapes facilitating the manipulation thereof without tools.

6. A barrow according to claim 4 or 5, characterised in that one of the pieces (14, 15) is used in isolation to make up the removable L-shaped structure and the holes provided for connection to the other piece are thus used for connection to the chassis.

7. A barrow according to any one of claims 1 to 6, characterised in that at least in the vicinity of the end (7) of the main chassis provided with steerable castors, the side rails (3, 4) of the main chassis (2) are each continued by a crook (17) and the steerable castors (16) are fixed to the free end (18) of this crook.

8. A barrow according to any one of claims 1 to 7, characterised in that the folding portion (19) of the chassis has the form of an arch of which the two arms (20, 21) which are articulated round a shaft (22) of the main chassis have, beyond this shaft (22), an extension in length at least equal to the width of the crook (17) and provided at its free end (23) with a member (24) which can be locked on this crook (17) in a position where these arms (20, 21) are substantially perpendicular to the main chassis (2).

_Fig.1_

_Fig:2_

_Fig:3_